# EUROPEAN PATENT APPLICATION

(11) **EP 4 817 703 A1**
(43) Date of publication of application: **07.10.2026**
(21) Application number: 26168114.2
(22) Date of filing: 26.03.2026
(51) Int. Cl.: A63C 11/02

(54) **SKI HOLDER**

(30) Priority: 01.04.2025 SE 2530185
(71) Applicant: Firma Robin Sundberg AB, 791 43 Falun (SE)
(72) Inventor: Sundberg, Robin, 791 43 Falun (SE)
(74) Representative: Industripatent i Växjö AB

(57) **Abstract**

The present disclosure relates to a ski holder (1) for a pair of skis, having a first clamp (3) presenting a first clamp surface (5A, 5B), and a second clamp (7) presenting a second clamp surface (9A, 9B) facing the first clamp surface (5A, 5B). A lever portion (11) is provided with a head (13) and a shaft (15), extending from the head (13), and an end (17) of the shaft distal to the head (13) is attached to the second clamp (7) through an opening (19) in the first clamp. A spring (21), arranged on the shaft (15) between the first clamp (3) and the head (13), urges the head (13) away from the first clamp (3), thereby urging the second clamp surface (9A, 9B) towards the first clamp surface (5A, 5B).

## Description

### Technical field

The present disclosure relates to a ski holder for a pair of skis, comprising a first clamp presenting a first clamp surface, and a second clamp presenting a second clamp surface facing the first clamp surface.

### Background

Ski holders of different types are known; one example being illustrated for instance in US-4059208-A.

One general problem with ski holders is how to make them reliable, easy to use, and reasonably small-sized.

### Summary

One object of the present disclosure is therefore to provide an improved ski holder.

This is achieved by a ski holder according to claim 1. More particularly, in a ski holder of the initially mentioned type, a lever portion is provided, comprising a head and a shaft extending from the head, wherein an end of the shaft, distal to the head, is attached to the second clamp through an opening in the first clamp. A spring is arranged on the shaft between the first clamp and the head, urging the head away from the first clamp, thereby urging the second clamp surface towards the first clamp surface.

Such a ski holder may be easily operated with one hand, even with thick ski gloves, by pushing the lever portion towards the first clamp. The ski holder may fit in a ski jacket pocket.

The first and second clamp surfaces may each comprise a first and a second portion, located on opposite sides of the shaft. This provide ski clamping surfaces symmetrically located in relation to the shaft, accomplishing firm holding of the skis. Further, the shaft can extend in between the skis' gliding surfaces, which may each be provided with a layer of sticky klister wax, which may be kept apart.

The lever portion and the second clamp may be configured to be turned at least 90 degrees in relation to the first clamp by the shaft pivoting or turning in the opening in the first clamp. This facilitates inserting the second clamp in between a pair of skis when the ski holder is used.

The second clamp may be configured to be locked, when the spring is in its maximum extension, in two different positions in relation to the first clamp, separated by a 90 degrees turning of the shaft in relation to the first clamp. This facilitates keeping the second clamp in a position where the insertion is made easier.

Typically, the end of the shaft distal to the head may be attached to the second clamp by means of a snap fit. This makes it very simple to assemble the ski holder.

At least one of first clamp surface and the second clamp surface may be provided with a surface layer in a material that is softer than the remainder of the clamp, such as for instance rubber. This provides additional friction between the skis and the ski holder preventing that the ski holder slides in relation to the skis.

Typically, the first clamp, the second clamp, and the lever portion may be made by injection moulding in a plastic material, such as Polypropylene, PP.

The head portion may comprise holders configured to receive ski poles with a snap fit.

The first clamp may comprise at least one tab extending towards the second clamp from an end of the first clamp. This may facilitate keeping the skis together when the ski holder is applied.

The maximum distance between the clamp surfaces may be in the range between 50-75 mm, which is suitable for most cross-country skis.

### Brief description of the drawings

Fig 1 is an exploded view of a ski holder according to the present disclosure.
Fig 2 shows the ski holder in a first position.
Fig 3 shows the ski holder in a second position.
Figs 4-7 illustrate use of the ski holder.
Fig 8 shows a perspective view of the first clamp.
Fig 9 is a perspective view of the lever portion in isolation.
Fig 10 shows a cross-section cut along the centre of the shaft.

### Detailed description

The present disclosure relates to ski holders, used to keep a pair of skis together to facilitate carrying, storage, and transport of the skis. Optionally, the ski holders may also provide means for keeping a pair of ski poles attached to the pair of skis.

The ski holder is primarily intended for cross-country skis, which generally are lighter than alpine skis. Cross-country skis usually have a width in the range 45-70 mm, and sometimes klister wax is used on the traction portion of the skis' gliding surfaces.

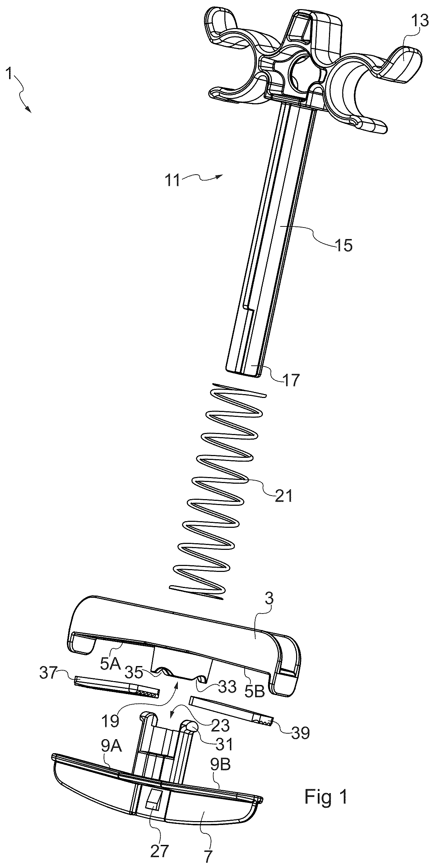

Fig 1 is an exploded view including all parts of a ski holder 1. Typically, two such ski holders are used on a pair of skis, one at the front portion and one at the rear portion.

The ski holder 1 comprises a first clamp 3, a second clamp 7, a lever portion 11, and a spring 21.

The lever portion 11, which may also be referred to as a plunger, comprises a head 13 and a shaft 15, extending from the head. The head 13 is the part of the ski holder that is acted on by the user when attaching the holder to a pair of skis, by pushing and optionally turning the head 13, which to some extent extends perpendicularly to the axial direction of the shaft 15.

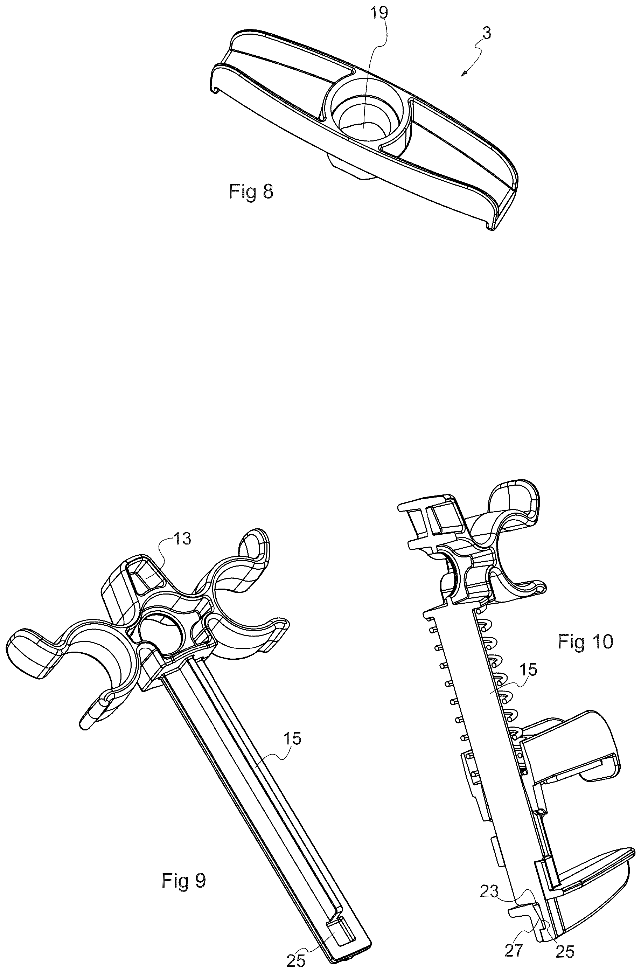

One end 17 of the shaft, distal to the head 13, is configured to be fixedly attached to the second clamp 7 passing through an opening 19 in the first clamp 3, this opening 19 being more visible in the perspective view of the first clamp 3 in isolation in fig 8. Thereby, the lever portion 11, together with the second clamp 7 may be moved in the axial direction of the shaft 15 in relation to the first clamp 3 and may also be turned about this axial direction in relation to the first clamp 3.

It is possible to configure a snap fit between the aforementioned end 17 of the shaft 15 and the second clamp 7. Then, the second clamp 7 may comprise an opening 23, cf. fig 10, with a cross section that corresponds to the cross section of the shaft 15 at the distal end 17, such that the latter fits snugly in the opening 23. There may be provided a recess 25 in the shaft end 17, cf. figs 9, 10, and a projection 27 in the opening 23 may be configured to snap into this recess 25 when the shaft 15 is fully inserted in the opening 23, thereby permanently attaching the shaft end 17 therein. It should be noted however that other alternatives exist. For instance, the end 17 of the shaft 15 could be glued to the second clamp 7, or a screw could permanently attach the shaft 15 to the second clamp 7. Alternatively, the shaft can be made in one piece with the second clamp 7 and can be connected with the head 13 in one of the ways described above.

The spring 21, in the illustrated case configured as a helical compression spring, is arranged on the shaft 15, between the first clamp 3 and the head 13. The spring 21 is compressed such that it urges the head 13 away from the first clamp 3. Thereby, correspondingly, the second clamp 7 is urged towards the first clamp 3, and a pair of skis may be retained between the first 3 and second 7 clamps.

To this end, the first clamp presents a first clamp surface 5A, 5B, facing the second clamp and the second clamp 7 presents a second clamp surface 9A, 9B facing the first clamp 3. As illustrated, the first clamp surface comprises a first 5A and a second 5B portion, located on opposite sides of the shaft 15, and the second clamp surface correspondingly comprises first 9A and a second 9B portions extending in opposite directions from the shaft 15. Although the illustrated configuration has advantages as will be discussed, it would be possible to configure the clamp surfaces to extend in only one direction from the shaft 15.

The ski holder 1 may include features that lock the first and second clamps 3, 7 in mutually different angular positions with regard to the axial direction of the shaft 15, in order to facilitate use of the ski holder 1. In the case illustrated in fig 1, the second clamp 7 is provided with a projection 31 that matches with one or more recesses 33, 35 in the first clamp 3, to provide this locking function. When the spring 21 is fully extended, i.e. at its maximum extension, still being compressed, the projection 31 snaps into the recess 33, thereby locking the first and second clamps 3, 7 in a mutual position with regard to the axial direction of the shaft 15. In this position, elongated directions of the first and second clamps 3, 7, perpendicular to the axial direction of the shaft 15, are mutually parallel, and the ski holder 1 is as flat as it can be, which is suitable for storing in a ski jacket pocket, for instance. Typically, the second clamp 7 is configured to be locked in two different positions in relation to the first clamp 3, separated by a 90 degrees turning of the shaft 15 in relation to the first clamp 3. This is accomplished by at least one second recess 35 in the first clamp 3 in addition to the first recess 33.

In the exploded view of fig 1, two pads 37, 39 of an elastic material such as rubber are illustrated. They are optional and can be glued to the clamp surface portions 5A, 5B and generally provide a surface layer in a material that is softer than the remainder of the clamp and providing more friction. Typically, pads 37, 39 can have an adhesive surface such that they are self-adhesive, although glue could also be attached to the clamp surface portions 5A, 5B. Note that the pads 37, 39 could just as well be attached to the clamp surface portions 9A, 9B of the second clamp 7, or to all surface portions 5A, 5B, 9A, 9B. At third option would be to produce either or both clamps by two-component injection moulding, such that the softer layer is integral with one or both of the clamps 3, 7.

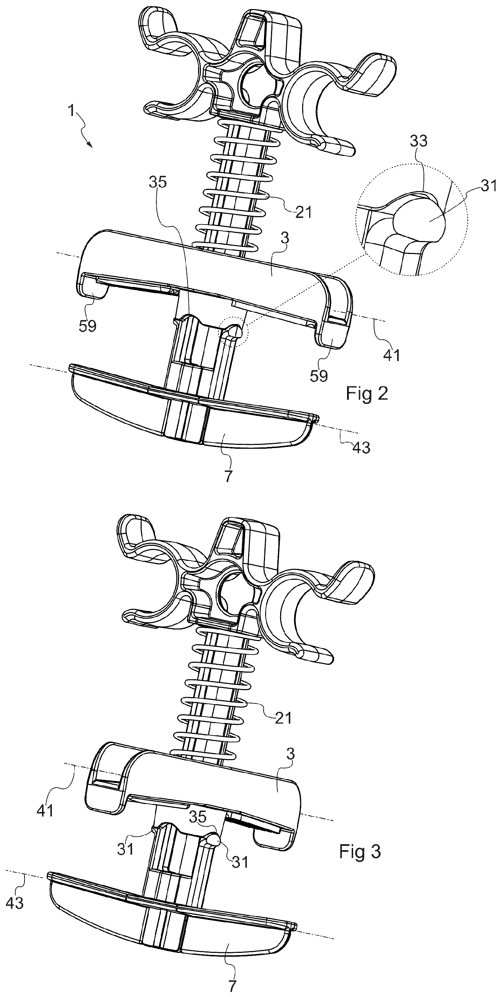

Fig 2 illustrates the ski holder 1 in a first position, typically a storage position, where projection 31 has snapped into the recess 33. Here, the elongate axes 41, 43 of the first 3 and second 7 clamps, respectively, are substantially parallel and locked in this position by the projection 31, the recess 33, and the spring 21. This means that the ski holder as a whole is as flat as possible and can be stored in a ski jacket pocket, for instance.

When the ski holder 1 is to be used, the first clamp 3 may be turned, overcoming the force of the spring 21 such that the projection 31 moves out of the recess 33 and instead snaps into an alternative recess 35, when the first clamp 3 has been turned 90 degrees about the axis of the shaft 15. Of course, alternatively expressed, the lever portion 11 and the second clamp 7 are turned in relation to the first clamp 3.

This is illustrated in fig 3, where the ski holder 1 in a second position, typically referred to as an insertion position. Then, the elongate axes 41, 43 of the first 3 and second 7 clamps, respectively, are substantially perpendicular and locked in this position by the projection 31, the alternative recess 35, and the spring 21.

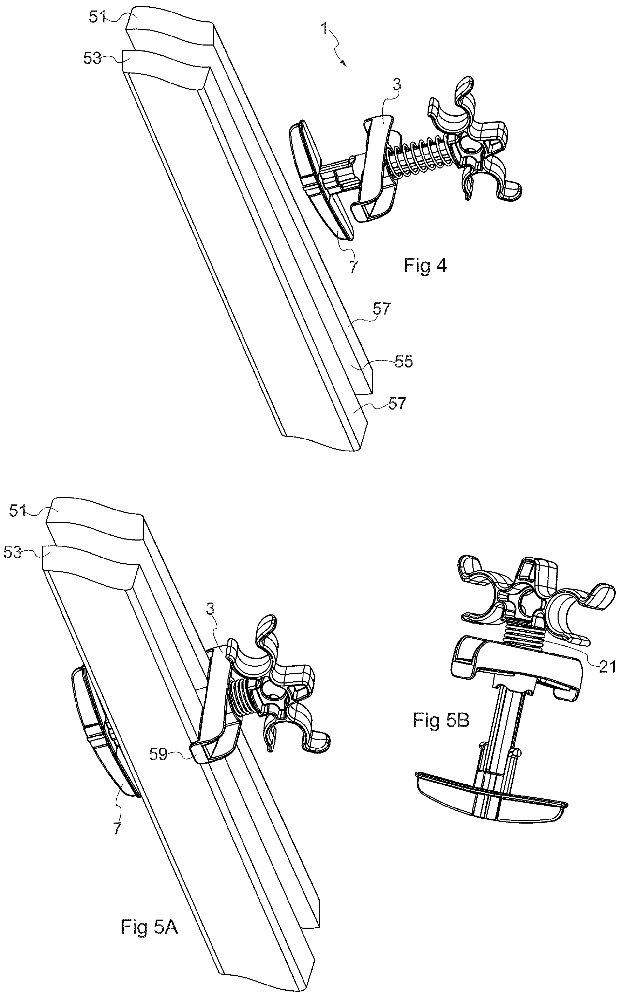

Figs 4-7 illustrate use of the ski holder 1 as shown in fig 3 on a pair of skis 51, 53. The gliding surfaces 55 of the skis are facing each other, and the ski holder will connect with the side edges 57 on both sides of the skis. The second clamp 7 of the ski holder 1 in fig 4 is inserted between the skis 51, 53, in the space between the gliding surfaces 55. It should be noted that the camber of cross-country skis often inherently provide such a space in between the gliding surfaces, when kept with the gliding surfaces 55 facing each other.

In fig 5A, the second clamp 7 and the shaft 15 have been inserted in the aforementioned space, and the lever portion 11 has been pushed, such that the spring 21 is fully compressed, cf. fig 5B.

Returning to fig 5A, the second clamp 7 now reaches past the rear side edges of the skis. The first clamp 3 and its surface portions 5A, 5B are pressed against the opposing side edges 57. As illustrated in fig 2, tabs 59, which are optional, may extend from the edges of the first clamp 3, helping with keeping the skis positioned. Those tabs 59 reach over a part of the ski top surfaces. While this limits the thickness of the skis, it is noted that cross country skis usually are thinner towards their front and rear ends and therefore finding a thin enough portion of the skis is not difficult. Such tabs could be provided also on the second clamp 7, pointing towards the first clamp 3

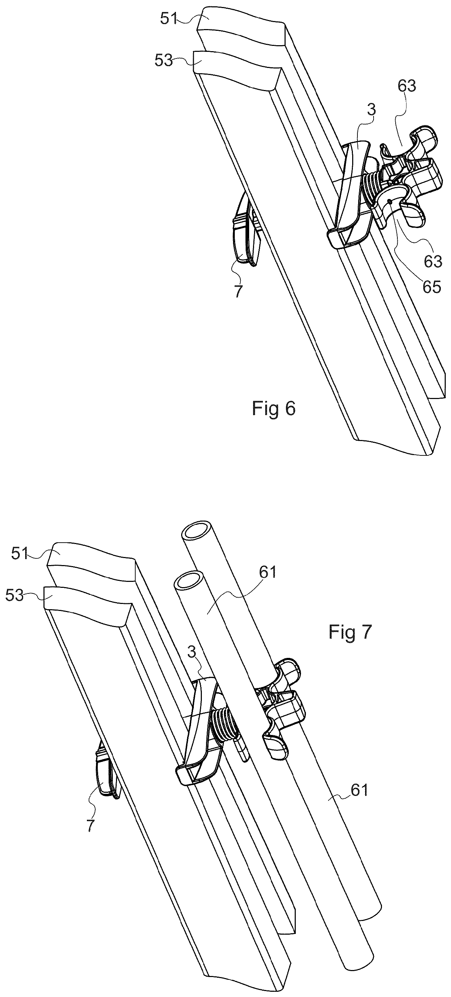

From the position in fig 5A, the lever portion 11 and the second clamp 7 are again turned 90 degrees in relation to the first clamp 3 and the skis 51, 53 into the position in fig 6. Thus the second clamp 7 reaches behind the rear (not visible in fig 6) side edges of the skis 51, 53.

Then, the lever portion 11 is released such that the second clamp 7 is urged by the spring 21 towards the first clamp 3, keeping the skis 51, 53 fixed in relation to the ski holder 1 and each other, as illustrated in fig 7. Typically, two such ski holders are attached in this way, one on the rear half and one on the front half of the skis 51, 53. Then, as illustrated, a pair of ski poles 61, may be attached to the ski holder, using snap locks 63 on the head 13 of the lever portion. It would be possible as an alternative to instead locate the ski pole snap locks 63 on the second clamp 7. An optional bead 65 (cf. fig 6) or other small portion of a softer, higher friction material, such as rubber inside the snap locks 63 may prevent the ski poles 61 from sliding therein.

The above illustrated configuration has some advantages that are specific to cross-country skis. As the clamps 3, 7 work against the side surfaces 57 of the skis rather than against the top surfaces, they do not counteract or reduce the camber of the skis which may preferably be maintained, especially in long term storage. Also surfaces with sticky klister wax in the kick region under the ski bindings can be kept separate thanks to the ski holder shaft 15 entering in between the gliding surfaces 55 of the skis. To be adapted for cross country skis, the maximum distance between the clamp surfaces 5A, 5B and 9A, 9B may be in the range 50-75 mm, although wider gaps may be considered.

The present disclosure is not restricted to the above examples and may be varied and altered in different ways within the scope of the appended claims.

## Claims

1. A ski holder (1) for a pair of skis, comprising
- a first clamp (3) presenting a first clamp surface (5A, 5B), and
- a second clamp (7) presenting a second clamp surface (9A, 9B) facing the first clamp surface (5A, 5B), **characterized by**
- a lever portion (11) comprising a head (13) and a shaft (15) extending from the head (13), wherein an end (17) of the shaft distal to the head (13) is attached to the second clamp (7) through an opening (19) in the first clamp, and
- a spring (21) arranged on the shaft (15) between the first clamp (3) and the head (13), urging the head (13) away from the first clamp (3), thereby urging the second clamp surface (9A, 9B) towards the first clamp surface (5A, 5B).

2. Ski holder according to claim 1, wherein the first clamp surface comprises a first (5A) and a second (5B) portion, located on opposite sides of the shaft (15) and the second clamp surface comprises a first (9A) and a second (9B) portion located on opposite sides of the shaft (15).

3. Ski holder according to claim 1 or 2, wherein the lever portion (11) together with the second clamp (7) are configured to be turned at least 90 degrees in relation to the first clamp by the shaft (15) pivoting in the opening (19) in the first clamp (3).

4. Ski holder according to claim 3, wherein the second clamp (7) is configured to be locked, when the spring (21) is fully extended, in two different positions in relation to the first clamp (3), being separated by a 90 degrees turning of the shaft (15) in relation to the first clamp (3).

5. Ski holder according to any of the preceding claims, wherein the end (17) of the shaft (15) distal to the head (13) is attached to the second clamp (7) by means of a snap fit.

6. Ski holder according to any of the preceding claims, wherein at least one of first clamp surface (5A, 5B) and the second clamp surface (9A, 9B) is provided with a surface layer (37, 39) in a material that is softer than the remainder of the clamp (3, 7).

7. Ski holder according to any of the preceding claims, wherein the first clamp (3), the second clamp (7), and the lever portion (11) are made by injection moulding a plastic material, such as Polypropylene, PP.

8. Ski holder according to any of the preceding claims, wherein the head (13) comprises holders (63) configured to receive ski poles with a snap fit.

9. Ski holder according to any of the preceding claims, wherein the first clamp (3) comprises at least one tab (59) extending towards the second clamp (7) from an end of the first clamp (3).

10. Ski holder according to any of the preceding claims, wherein the maximum distance between the clamp surfaces (5A, 5B and 9A, 9B) is in the range between 50-75 mm.
